# FASCICULE DE BREVET EUROPEEN

(11) **EP 2 771 196 B1**
(45) Date de publication et mention de la délivrance du brevet: **06.07.2016**
(21) Numéro de dépôt: 12743753.1
(22) Date de dépôt: 10.07.2012
(51) Int. Cl.: B60B 3/04, B21D 53/26

(54) **PROCEDE DE FABRICATION D'UNE ROUE HYBRIDE EN DEUX PARTIES EN ALLIAGE LEGER NOTAMMENT ALUMINIUM**
HERSTELLVERFAHREN FÜR EIN ZWEITEILIGES RAD IN MISCHBAUWEISE AUS LEICHTMETALL INSBESONDERE ALUMINIUM
PRODUCTION METHOD FOR A HYBRID WHEEL CONSISTING OF TWO PARTS MADE OF LIGHT-METAL PREFERABLY ALUMINUM

(30) Priorité: 25.10.2011 FR 1159645
(43) Date de publication de la demande: 03.09.2014
(73) Titulaire: Saint Jean Industries, 69220 Saint-Jean d'Ardières (FR)
(72) Inventeur: DI SERIO, Emile, Thomas, F-69840 Chénas (FR)
(74) Mandataire: Cabinet Laurent & Charras
(86) Numéro de dépôt international: PCT/FR2012/051625
(87) Numéro de publication internationale: WO 2013/060952

(56) Documents cités:
- EP-A1- 0 119 365
- EP-A2- 0 128 570
- WO-A1-97/15462
- WO-A2-2007/082762
- GB-A- 2 083 765

## Description

L'invention se rattache au secteur technique des roues, notamment pour véhicules, véhicules automobiles, et également au secteur technique de la fonderie et de la forge pour la fabrication de pièces en alliage léger, notamment aluminium destinées notamment à l'industrie automobile.

On connaît par exemple la réalisation de roue avec jante et flasque monobloc obtenue par moulage mais nécessitant des moyens techniques complexes et couteux et requérant des dimensions d'épaisseur très conséquentes entraînant ainsi un poids de la roue obtenue trop important par rapport aux exigences actuelles.

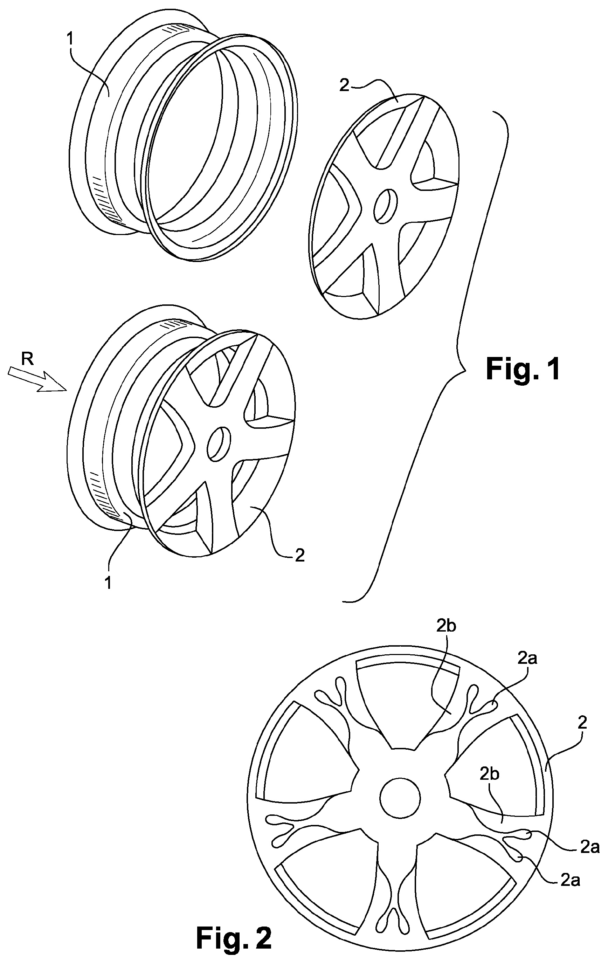

Au plan de l'art antérieur selon la figure 1 relatif aux deux aspects précités, il est connu déjà de réaliser des roues hybrides (R) en deux parties comprenant une partie jante (1) et une partie disque (2) avant ou disque de roue, ces deux parties étant solidarisées par tout moyen de liaison approprié.

Pour y remédier, il a été proposé par exemple dans le brevet EP 0 854 792 une roue hybride en deux parties obtenue selon un procédé particulier. La liaison entre la jante et le flasque est assurée par un joint soudé par une opération de soudage par friction à mouvement cyclique. Cette technologie qui fait l'objet d'une exploitation par l'une des filiales du Demandeur répond de manière satisfaisante aux exigences du marché. Cependant, la mise en oeuvre de ce procédé entraîne quelques inconvénients par rapport aux nouvelles exigences du marché qui sont par exemple d'obtenir une réduction du poids des produits de l'ordre de 20 à 30 %. Par ailleurs, dans ce brevet EP 0 854 792, la jante corroyée de la roue est basée sur un tube coulé par centrifugation, transformé par laminage ou par friction en vue d'obtenir la configuration de la jante finale. Les deux parties de roue sont constituées d'un alliage d'aluminium corroyé. Ces opérations restent longues et coûteuses. Il est en outre nécessaire d'effectuer des contrôles de radiographies du flasque.

DE 32 18 606 A1, qui est considéré l'état de technique le plus proche, divulgue un procédé de fabrication et une roue hybride en alliage léger du type comprenant un disque (2) et une jante (1) susceptible d'être solidarisés par une soudure, mettant en oeuvre les différentes phases opératoires suivantes : - Réalisation du disque avant obtenue par une opération de forgeage en vue de l'obtention du disque avant et opération d'ébavurage pour l'obtention du dit disque avant, - Réalisation de la partie jante avec fabrication d'une billette d'alliage léger et transformation de celle-ci en un flanc circulaire obtenu par extrusion à chaud ou à froid (P1), puis expansion (P2) de ce flanc circulaire aux dimensions de la jante finale, puis opération de fluotournage (P3) à froid ou à chaud du dit flanc circulaire au profil de la jante dans sa forme et profil finaux, - Assemblage par soudage de la partie disque avant et de la jante par une opération de soudure après usinage des zones à assembler.

Le Demandeur exploite par ailleurs depuis 1983 une technologie combinant une phase de fonderie et une phase de forge de pièces en alliage d'aluminium, connue sous la marque "COBAPRESS". Cette technologie est définie dans le brevet EP 119 365 et consiste à réaliser une préforme de fonderie par coulage d'alliage léger du type aluminium ou alliage d'aluminium, puis à transférer la préforme obtenue dans une matrice de forge ayant des dimensions sensiblement inférieures aux dimensions de la préforme pour ensuite effectuer une opération de forgeage permettant l'obtention des propriétés de la pièce finale à obtenir. Une opération d'ébavurage est ensuite effectuée sur le pourtour de la pièce finale obtenue après forgeage.

Une des problématiques de la fabrication des roues hybrides, en deux parties, et en particulier la partie disque avant consiste, dans la présence de différentes branches radiales qui relient le pourtour périphérique de cette partie disque, avec la partie centrale de celle-ci formant moyeu et qui sera directement en liaison ensuite pour la fixation de la roue sur l'arbre de roue. On a représenté figure 2 en vue partielle le disque (2). L'obtention en fonderie de ce type de pièce fait apparaître des contraintes spécifiques liées aux zones de coupures (2a) d'alimentation qui se produisent dans les noeuds de liaison (2b) entre le pourtour périphérique du disque et les extrémités de jonction des branches en regard. Il apparaît clairement des coupures d'alimentation qui se produisent dans les dits noeuds.

Ces problèmes d'alimentation ne peuvent se résoudre en fonderie traditionnelle que par l'utilisation d'alliages plus facilement coulables du type connu, par exemple sous la référence AS 11. Ces alliages ne confèrent pas cependant les mêmes caractéristiques mécaniques et ne sont pas toujours suffisants pour éliminer entièrement ce genre de défaut. Une autre solution consiste à une augmentation des sections des branches de la roue ce qui engendre naturellement une augmentation du poids de la roue.

La démarche du Demandeur a donc été, à partir des technologies précitées, de réfléchir à une autre solution de conception d'une roue hybride en deux parties en alliage léger, type aluminium, et qui répond au problème posé et permet d'être en relation avec les besoins du marché.

La solution apportée par le Demandeur résulte d'un travail et d'une expérimentation en interne très importants car les différentes pistes de recherche et de travail effectués ont démontré un certain nombre de contraintes incompatibles avec les besoins et les conditions d'utilisation de ces roues hybrides.

Le Demandeur a donc été amené à concevoir et mettre au point un nouveau procédé à partir d'une sélection spécifique de phases opératoires.

Ainsi et selon une première caractéristiques de l'invention, le procédé de fabrication d'une roue hybride en alliage léger du type comprenant un disque avant et une jante susceptible d'être solidarisés par une soudure par friction, est remarquable en ce que il met en oeuvre les différentes phases opératoires suivantes :
- Réalisation du disque avant obtenue par une double opération de coulage d'une préforme de fonderie et transfert de la dite préforme dans une matrice de forge et opération de forgeage de la dite préforme en vue de l'obtention du disque avant et opération d'ébavurage pour l'obtention du dit disque avant,
- Réalisation de la partie jante avec fabrication d'une billette d'alliage léger et transformation de celle-ci en un flanc circulaire obtenu par extrusion à chaud ou à froid, puis expansion de ce flanc circulaire aux dimensions de la jante finale, puis opération de fluotournage à froid ou à chaud du dit flanc circulaire au profil de la jante dans sa forme et profil finaux,
- Assemblage par soudage de la partie disque avant et de la jante par une opération de soudure par friction après usinage des zones à assembler.

Le procédé tel que défini selon l'invention apparaît être particulièrement performant et présente les avantages suivants :
- La roue dans son ensemble démontre une tenue en fatigue 2 fois supérieure à celles constatées habituellement, notamment lors des tests de fatigue en virage.
- La roue présente une meilleure tenue aux tests d'impact (énergie absorbée plus importante sans fissuration du pourtour du disque de roue).
- La section de la jante est plus fine de par son obtention par extrusion avec donc un gain de poids. L'obtention d'une telle épaisseur est impossible à obtenir en fonderie gravitaire ou basse pression.
- Il n'y a plus de problème d'étanchéité avec la jante de par son procédé de fabrication incluant l'opération de fluotournage à froid ou à chaud.

La problématique liée à l'obtention de noeuds dans les branches de la partie disque est résolue car le procédé de fabrication de cette partie permet de ressouder les défauts internes de sorte qu'il y a une quasi absence de tels défauts. En outre, par ce procédé particulier de fabrication de la partie disque, il est possible de calculer la configuration de cette pièce avec un design optimum en jouant sur le côté de la face avant qui n'est pas visible. On peut par exemple augmenter les sections de la fonderie et faire partir le surplus de matière dans la bavure au moment de la forge. En outre, un autre avantage important réside dans l'utilisation du produit semi-fini constitué par le flan circulaire obtenu par extrusion. En effet, le flan circulaire d'un diamètre donné permet la fabrication de différents profils de jantes indépendamment du disque obtenu par les opérations successives de coulage et de forgeage selon le procédé COBAPRESS. On réduit les défauts sur la pièce de fonderie et on ne rajoute pas de poids à la pièce finale.

Grâce à l'utilisation du procédé de fabrication du disque, sous l'appellation "Procédé COBAPRESS" on peut utiliser une grande variété de profil, sans limites, on s'affranchit des problèmes de fonderie qui sont réglés par le procédé lui-même.

Par cette mise en oeuvre particulière, on peut obtenir des parties de toiles dans les branches du disque pouvant descendre par exemple jusqu'à 4 mm impossible à obtenir en fonderie traditionnelle pour ces géométries. On a donc ainsi une optimisation totale avec un poids contrôlé et réduit au maximum. Par ailleurs, l'état de surface est amélioré à la partie disque par rapport à un disque obtenu en fonderie traditionnelle. Un état de surface parfait est obtenu par l'opération de forgeage et il n'est plus nécessaire d'avoir un poteyage de fonderie avec un grain fin qui peut être un problème parfait car le poteyage se dégrade, alors que ce n'est pas le cas en situation de frappe de forge. On évite que les porosités se trouvant proches de la surface n'éclatent ou ne bullent au traitement thermique (phénomène communément appelé « bullage ») et qui sont cause de rebut générant la perte de la valeur ajoutée mise sur la roue (jusqu'à 15% de rebuts visuels)

D'autres avantages sont apportés par la mise en oeuvre du procédé selon l'invention, et notamment en matière d'outillage.

L'invention vise donc la combinaison sélective des différentes phases du procédé pour l'obtention et la fabrication de chacun des deux composants, à savoir la jante et le disque.

La mise en oeuvre du soudage par friction des deux composants contribue également à l'obtention de pièce finale sous forme de roue hybride particulièrement homogène et fiable en termes de qualité

En termes d'optimisation du poids des roues hybrides obtenues, les mesures effectuées à partir de tests ont apporté les résultats suivants :

| | Roue 19 pouces | Roue 18 pouces | Roue 17 pouces |
|---|---|---|---|
| Poids initial | 13.5 kg | 12.5 kg | 10.2 kg |
| Poids selon le procédé de l'invention | 10 kg | 10.5 kg | 9.0 kg |
| Gain | 3.5 kg | 2.0 kg | 1.2 kg |

Ce gain de poids a des conséquences non négligeables sur la production de gaz carbonique. Par l'allègement inhérent seulement aux quatre roues du véhicule, le gain de poids génère la réduction de la consommation d'essence ou de gazole.

On a ainsi représenté aux figures des dessins l'art antérieur et la mise en oeuvre de l'invention.
La figure 1 est une vue à caractère schématique d'une roue hybride en deux parties (disque et jante) représentées séparées, puis assemblées.
La figure 2 est une vue partielle de la partie disque selon l'art antérieur avec représentation des zones de coupures d'alimentation sur les bras,

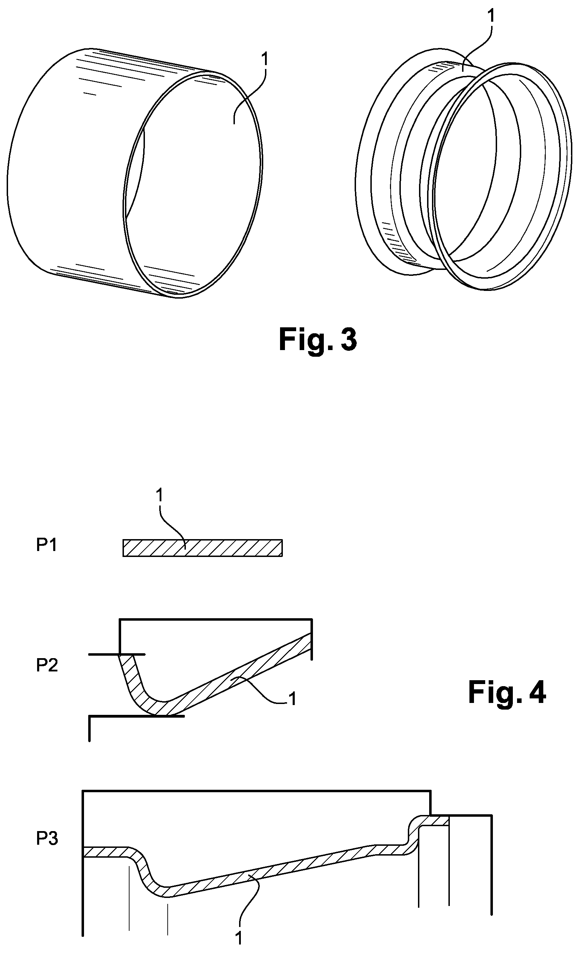

La figure 3 est une vue à caractère schématique illustrant l'obtention du flanc circulaire par extrusion, puis sa mise en forme finale par fluotournage à froid,
La figure 4 est une vue à caractère schématique illustrant le procédé de fabrication de la partie jante selon les trois phases de formation du flanc circulaire par extrusion (P1), puis d'expansion (P2) du dit flan, puis de fluotournage (P3).

On a identifié, à titre d'exemple, un profil de la jante, mais comme indiqué précédemment, le procédé selon l'invention, est particulièrement intéressant puisqu'à partir d'un même diamètre de flan circulaire, on peut obtenir différents profils de la partie jante.

Le produit final obtenu selon l'invention n'est pas représenté puisqu'il présente globalement les mêmes formes que la roue hybride représentée figure 1.

## Revendications

1. Procédé de fabrication d'une roue hybride en alliage léger du type comprenant un disque (2) et une jante (1) susceptible d'être solidarisés par une soudure par friction, **caractérisé en ce qu'**il met en oeuvre les différentes phases opératoires suivantes :
- Réalisation du disque avant obtenue par une double opération de coulage d'une préforme de fonderie et transfert de la dite préforme dans une matrice de forge et opération de forgeage de la dite préforme en vue de l'obtention du disque avant et opération d'ébavurage pour l'obtention du dit disque avant,
- Réalisation de la partie jante avec fabrication d'une billette d'alliage léger et transformation de celle-ci en un flanc circulaire obtenu par extrusion à chaud ou à froid (P1), puis expansion (P2) de ce flanc circulaire aux dimensions de la jante finale, puis opération de fluotournage (P3) à froid ou à chaud du dit flanc circulaire au profil de la jante dans sa forme et profil finaux,
- Assemblage par soudage de la partie disque avant et de la jante par une opération de soudure par friction après usinage des zones à assembler.

2. Roue hybride en alliage léger comprenant un disque (2) et une jante (1), **caractérisée en ce que** la partie disque est réalisée et obtenue par une double opération de coulage de fonderie pour la constitution d'une préforme ensuite forgée, et la partie jante est réalisée par une triple opération d'extrusion (P1), puis d'expansion (P2), puis de fluotournage (P3), la partie jante et la partie disque étant ensuite assemblées par une opération de soudure par friction.

## Patentansprüche

1. Verfahren zur Herstellung eines Hybridrades aus Leichtmetall mit einer Scheibe (2) und einer Felge (1), die durch Reibschweißen miteinander verbunden werden können, **dadurch gekennzeichnet, dass** im Rahmen dieses Verfahrens folgende Verfahrensschritte ausgeführt werden:
- Realisierung der durch einen doppelten Gießvorgang einer Gussstück-Vorform und Transfer dieser Vorform in ein Schmiedegesenk erhaltenen vorderen Scheibe und Schmiedevorgang dieser Vorform zum Erhalt der vorderen Scheibe und Entgratungsvorgang zum Erhalt dieser vorderen Scheibe,
- Realisierung des Felgenteils mit Herstellung eines Leichtmetall-Rohlings und anschließender Umformung in eine durch Heiß- oder Kaltextrusion (P1) erhaltene kreisrunde Flanke und anschließendes Expandieren (P2) dieser kreisrunden Flanke auf die Abmessungen der endgültigen Felge und anschließender Kalt- oder Warmfließdrehvorgang (P3) dieser kreisrunden Flanke zur Erzielung der endgültigen Form und Profilierung des Felgenprofils,
- Zusammenschweißen des vorderen Scheibenteils und der Felge durch einen Reibschweißvorgang nach Bearbeitung der zusammenzufügenden Bereiche.

2. Hybridrad aus Leichtmetall mit einer Scheibe (2) und einer Felge (1), **dadurch gekennzeichnet, dass** der Scheibenteil durch einen doppelten Gussstück-Gießvorgang zur Ausbildung einer Vorform realisiert und erhalten und anschließend geschmiedet wird und der Felgenteil durch einen dreifachen Extrusions- (P1), anschließenden Expansions- (P2) und anschließenden Fließdrehvorgang (P3) realisiert wird, wobei der Felgenteil und der Scheibenteil im Anschluss daran durch einen Reibschweißvorgang zusammengefügt werden.

## Claims

1. Process of production of a hybrid wheel in light alloy of the type including a front disk (2) and a rim (1) able to be rendered integral by a friction weld, **characterized by** the fact that it involves the following working phases:
- production of the front disk, obtained via a dual operation of casting of an initial foundry preform and transferring the said initial foundry preform into a forging die, plus the operation of forging of the aforesaid initial foundry preform in view of obtaining the front disk, and then the operation of flash removal to obtain the said front disk;
- manufacturing of the rim portion, with production of a billet of light alloy, and conversion of the said billet into a circular flank obtained by hot or cold extrusion (P1), followed by expansion (P2) of this circular flank to the dimensions of the final rim, plus the operation of hot or cold flow-forming (P3) of the disk to the final form and profile of the rim;
- assembly of the front disk portion and the rim via welding, involving a friction welding operation after machining of the areas to be assembled.

2. Hybrid wheel in light alloy, including a disk (2) and a rim (1), **characterized by** the fact that the disk portion is produced and obtained through a dual operation of casting of an initial foundry preform, followed by forging, and that the rim portion is produced through a triple operation of extrusion (P1), followed by expansion (P2), then flow-forming (P3), with the rim portion and the disk portion then being assembled by a friction welding operation.
